# FASCICULE DE BREVET EUROPEEN

(11) **EP 4 073 480 B1**
(45) Date de publication et mention de la délivrance du brevet: **15.04.2026**
(21) Numéro de dépôt: 20820227.5
(22) Date de dépôt: 10.12.2020
(51) Int. Cl.: G01L 1/06, G01M 5/00, G01N 3/06, G01N 3/08

(54) **DISPOSITIF DE CONTROLE D'UNE PIECE FRAGILE**
VORRICHTUNG ZUR STEUERUNG EINES ZERBRECHLICHEN TEILS
DEVICE FOR CONTROLLING A FRAGILE PART

(30) Priorité: 11.12.2019 FR 1914157
(43) Date de publication de la demande: 19.10.2022
(73) Titulaire: SAINT-GOBAIN CENTRE DE RECHERCHES ET D'ETUDES EUROPEEN, 92400 Courbevoie (FR)
(72) Inventeur: BOINET, Mickael, 84660 MAUBEC (FR); GLEIZE, Vincent, 84440 ROBION (FR); GRAVELEAU, Matthieu, 84000 AVIGNON (FR); HIS, Christian, 84300 CAVAILLON (FR); MARGOSSIAN, Alexane, 84210 PERNES-LES-FONTAINES (FR)
(74) Mandataire: Ipsilon
(86) Numéro de dépôt international: PCT/EP2020/085635
(87) Numéro de publication internationale: WO 2021/116347

(56) Documents cités:
- EP-A2- 3 128 306
- FR-A1- 3 038 710
- JP-A- H 095 175
- US-A- 4 625 567
- US-A1- 2013 333 485
- US-A1- 2017 167 932

## Description

### Domaine technique

L'invention concerne un dispositif et un procédé pour vérifier l'état physique d'une pièce fragile.

### Technique antérieure

JP409005175A décrit un fil fixé à ses extrémités sur une pièce et dont la rupture indique l'occurrence d'un niveau de contrainte sur la pièce. US4625567A1 décrit l'intégration d'un fil dans la piste d'une bague d'un roulement. La déformation plastique de ce fil permet d'évaluer les contraintes appliquées sur cette bague.

En service, une pièce fragile, en particulier en céramique ou en verre, est soumise à des contraintes susceptibles d'en modifier l'intégrité physique. En particulier, des chocs thermiques ou mécaniques peuvent provoquer des amorces de fissure, voire une rupture de la pièce.

La détection des amorces de fissures est extrêmement difficile car la propagation de fissures est très rapide, en particulier lorsque la pièce fragile est sollicitée en traction (dans le cas d'une pièce monolithique). En outre, la rupture fragile, ou « rupture catastrophique », de la pièce fragile peut résulter de la multiplication de microfissures difficiles à déceler.

Les capteurs de déformations actuels sont peu performants pour identifier les signes annonciateurs d'une rupture catastrophique d'une pièce fragile. Par ailleurs, leur encombrement limite leur domaine d'application, ce qui pose des difficultés lorsqu'une pièce fragile présente une forme particulière ou est difficile d'accès, par exemple lorsqu'elle est encapsulée ou enveloppée. Il existe donc un besoin pour un procédé permettant de surveiller l'état d'une pièce fragile de forme quelconque et/ou de tracer son histoire, en particulier pour déterminer si elle a subi des contraintes, par exemple des chocs mécaniques, ayant conduit à un endommagement susceptible d'affecter ses propriétés en service, voire de la rendre inutilisable, sans avoir recours à des techniques complexes d'investigation telles que des radiographies par exemple.

Un but de l'invention et de répondre, au moins partiellement, à ce besoin.

### Exposé de l'invention

### Résumé de l'invention

L'invention propose un dispositif selon la revendication 1 comportant une pièce fragile et un capteur de déformation fixé sur la pièce fragile, le capteur de déformation étant configuré pour se déformer de manière plastique sous l'effet d'au moins une contrainte appliquée à la pièce fragile et conduisant à un endommagement de la pièce fragile, de préférence sous l'effet d'une contrainte d'endommagement minimale de la pièce fragile, c'est-à-dire sous l'effet de la plus petite contrainte appliquée sur la pièce fragile et conduisant à un endommagement de la pièce fragile. On notera que les contraintes font référence à la pièce fragile, alors que la déformation fait référence au capteur de déformation.

Comme on le verra plus en détail dans la suite de la description, le capteur de déformation se déforme donc de manière plastique sous l'effet d'une contrainte ayant conduit à un endommagement de la pièce fragile, sans rupture du capteur de déformation ni de la pièce fragile. Lorsqu'on cesse d'appliquer cette contrainte, le capteur de déformation conserve donc une déformation résiduelle qui permet d'identifier que la pièce fragile a subi ladite contrainte. Cette mémorisation physique de l'occurrence de la contrainte d'endommagement est particulièrement avantageuse car elle permet un suivi discontinu dans le temps et une grande autonomie pour la pièce fragile. A la différence d'un contrôle de l'endommagement réalisé au moyen de jauges de contrainte conventionnelles, il n'est pas nécessaire de mesurer en continu la déformation du capteur de déformation.

Le capteur de déformation est configuré pour se déformer sous l'effet d'une contrainte appliquée sur la pièce fragile,
- de manière élastique lorsque la contrainte appliquée Ca est inférieure ou égale à une contrainte de seuil *Cs,* et
- de manière plastique lorsque la contrainte appliquée est supérieure à la contrainte de seuil,
la contrainte de seuil étant telle que Cs *< Ceₘᵢₙ* et, de préférence, (*Ceₘᵢₙ - Cs*)/*Cs* < 20%, *Ceₘᵢₙ* étant la contrainte d'endommagement minimale de la pièce fragile, c'est-à-dire la plus petite contrainte appliquée conduisant à un endommagement de la pièce fragile.

Comme on le verra plus en détail dans la suite de la description, le capteur de déformation se déforme donc de manière élastique lorsque la contrainte appliquée sur la pièce fragile est faible et éloignée de la contrainte d'endommagement minimale, c'est-à-dire typiquement en fonctionnement normal de la pièce fragile. Lorsqu'on cesse d'appliquer la contrainte, le dispositif revient donc à sa géométrie initiale.

Cependant, la contrainte de seuil, qui correspond à la limite de plasticité du capteur de déformation, est inférieure ou égale à la contrainte d'endommagement minimale *Ceₘᵢₙ.* Une, de préférence toute contrainte appliquée sur la pièce fragile et qui constitue une contrainte d'endommagement, c'est-à-dire supérieure à la contrainte d'endommagement minimale, produit donc une déformation plastique du capteur de déformation. Le capteur de déformation conserve ainsi une trace de l'application d'une contrainte d'endommagement.

Bien entendu, cela implique que le capteur de déformation soit fonctionnel lorsque cette contrainte supérieure à la contrainte d'endommagement minimale a été appliquée sur la pièce fragile. Autrement dit, la limite de rupture, qui marque la fin du domaine de déformation plastique du capteur de déformation n'est pas atteinte avant la pièce fragile soit endommagée.

En outre, la mesure de la déformation plastique permet avantageusement d'évaluer l'ampleur de la contrainte d'endommagement, et donc de l'endommagement de la pièce fragile.

Pour éviter que le capteur de déformation ne se déforme plastiquement alors que la pièce fragile n'a subi aucune contrainte d'endommagement, il est préférable que la contrainte de seuil soit la plus proche possible de la contrainte d'endommagement minimale.

De préférence, (*Ceₘᵢₙ- Cs)*/*Cs* < 10%, de préférence (*Ceₘᵢₙ* - *Cs)*/*Cs* < 5%, de préférence (*Ceₘᵢₙ* - Cs)/Cs < 1%.

De préférence, la contrainte d'endommagement minimale est la contrainte à partir de laquelle la pièce fragile commence à se microfissurer.

La contrainte peut être une contrainte d'origine mécanique, en particulier résultant d'un choc mécanique subi par la pièce fragile, ou une contrainte d'origine thermique, par exemple un choc ou un gradient thermique. La contrainte peut être à la fois d'origine thermique et d'origine mécanique lorsque des sollicitations thermiques sont associés à des sollicitations mécaniques, par exemple en cas de fluage en température sous charge.

L'invention présente un intérêt tout particulier pour les pièces fragiles en un matériau très rigide et très résistant mécaniquement, notamment dont le rapport MOE/ MOR est supérieur à 100, où MOE est le module d'Young et MOR est le module de rupture, exprimés en MPa.

De préférence, le capteur de déformation est configuré pour ne pas être détruit par l'application d'une contrainte quelconque sur la pièce fragile qui ne conduit pas à la rupture de la pièce fragile. Autrement dit, le capteur de déformation reste opérationnel tant que la contrainte appliquée sur la pièce fragile ne conduit pas à la rupture de la pièce fragile.

Dans un mode de réalisation, qui n'est pas préféré, le capteur de déformation est détruit avant la pièce fragile. On appelle *Cr_{c}* la contrainte appliquée sur la pièce fragile qui définit la limite supérieure du domaine de déformation plastique du capteur de déformation, c'est-à-dire la contrainte de rupture du capteur de déformation. Le capteur de déformation est donc configuré pour se déformer de manière plastique, sous l'effet d'une contrainte appliquée sur la pièce fragile, lorsque la contrainte appliquée est supérieure à la contrainte de seuil et inférieure à la contrainte de rupture *Cr_{c}* conduisant à une rupture du capteur de déformation. Pour que le capteur de déformation reste fonctionnel lorsque la contrainte d'endommagement minimale *Ceₘᵢₙ* a été appliquée sur la pièce fragile, il faut alors que *Ceₘᵢₙ < Cr_{c}.*

Dans un mode de réalisation qui n'est pas préféré, Cs ≥ *Ceₘᵢₙ.* Le capteur de déformation peut être alors utilisé pour ne détecter que des endommagements de la pièce fragile qui vont au-delà du plus petit endommagement.

Un dispositif sur l'invention peut encore comporter une ou plusieurs des caractéristiques qui peuvent être optionnelles suivantes :
- la pièce fragile est selon l'invention telle que revendiquée en un matériau céramique et/ou en un verre et/ou en une vitrocéramique et/ou en un composite à matrice céramique (CMC) ;
- le capteur de déformation présente une propriété, de préférence une impédance, de préférence une impédance acoustique et/ou électrique, de préférence au moins une résistance électrique, variable en fonction de sa géométrie, et en particulier variable en fonction de ladite la contrainte appliquée Ca ;
- le capteur de déformation forme un circuit conducteur électriquement, fermé sur lui-même et dépourvu de source d'énergie électrique ;
- le capteur de déformation comporte, voire est constitué d'une matrice de capteur, de préférence polymérique et de particules conductrices électriquement, de préférence des particules de carbone, de préférence des nanotubes de carbone, réparties dans la matrice de capteurs ;
- la matrice de capteur présente la forme d'une couche ou de plusieurs couches superposées ;
- le capteur de déformation comporte selon l'invention telle que revendiquée une matrice de capteur et un ensemble de particules conductrices électriquement réparties au sein de ladite matrice de capteur ;
- l'ensemble des particules conductrices électriquement constituent selon l'invention telle que revendiquée un réseau conducteur dont une propriété électrique, de préférence l'impédance, de préférence la résistance électrique, de préférence exclusivement la résistance électrique, est fonction d'un agencement des particules conductrices constituant le réseau conducteur, ledit agencement étant « modifiable » en ce que, sous l'effet d'une contrainte appliquée sur la pièce fragile, l'agencement des particules conductrices du réseau conducteur est modifié de sorte qu'il en résulte une modification de ladite propriété électrique du réseau conducteur ;
- les particules conductrices électriquement sont des nanotubes de carbone ;
- la matrice de capteur est en un matériau céramique ;
- la matrice de capteur est fixée sur un support, le support est fixé à une couche d'interfaçage et la couche d'interfaçage est fixée sur la pièce fragile, la couche d'interfaçage étant configurée pour se déformer sous l'effet de la contrainte Ca appliquée sur la pièce fragile,
   - de manière élastique lorsque la contrainte appliquée Ca est inférieure ou égale à la contrainte de seuil *Cs,* et
   - de manière plastique lorsque la contrainte appliquée Ca est supérieure à la contrainte de seuil *Cs.*
- la couche d'interfaçage est une colle « d'interfaçage », de préférence choisie parmi les colles polymères thermodurcissables, de préférence choisie parmi les colles polyuréthanes et/ou les colles époxy, voire est une colle à base de géopolymères ;
- la couche d'interfaçage présente une épaisseur inférieure à 2 mm, de préférence inférieure à 1mm, de préférence comprise entre 0,1 et 1 mm ;
- la couche d'interfaçage s'étend de préférence de manière à couvrir toute la surface du support, en particulier du support du patch, en regard de la pièce fragile ;
- le capteur de déformation comporte un patch du type décrit dans WO2017/009256, et une colle d'interfaçage, au moyen de laquelle le patch est collé sur le pièce fragile ;
- le dispositif comporte une deuxième pièce et le capteur de déformation est fixé à la pièce fragile et à ladite deuxième pièce ;
- la pièce fragile est choisie parmi :
   - une pièce d'un échangeur thermique, en particulier une tuile réfractaire, en particulier une tuile de revêtement de chaudière et/ou une coquille de protection de tube de réchauffeur d'un incinérateur, ou une pièce céramique d'un absorbeur solaire,
   - un support de cuisson, en particulier pour la cuisson d'objets céramiques, en anglais « *kiln furniture »,*
   - une tuile ou une pièce de protection d'une chambre de turbine de combustion, en particulier d'une chambre de turbine à gaz,
   - un bloc réfractaire de four, en particulier d'un four métallurgique ou d'un four de fusion de verre, en particulier un bloc de mur, un bloc de sole ou une pièce de voute,
   - une pièce de protection contre l'abrasion, dite « anti abrasion », en particulier pour un convoyeur, notamment un convoyeur destiné au transport de minerais (en anglais « *Wear Resistant Technology »,* WRT),
   - un abrasif, de préférence un abrasif aggloméré comportant des particules céramiques dans une matrice liante, en particulier une meule ou un disque abrasif destinés à la rectification ou au traitement de surface, par exemple destinés à l'affutage, au polissage, ou à l'ébavurage,
   - un outil de coupe en particulier en céramique,
   - un élément de pompe ou de circuit hydraulique, en particulier en céramique,
   - un isolant électrique, en particulier sous la forme d'un tube, en particulier en céramique,
   - un carreau de parement, en particulier un carreau céramique ou une pièce céramique ou vitrocéramique de parement,
   - une plaque, un tube comprenant un matériau vitrocéramique,
   - un vitrage, et en particulier une plaque de verre ou un pare-brise, de préférence un pare-brise d'un navire, d'un véhicule terrestre, par exemple d'une automobile, d'un camion, d'un train, ou d'un aéronef, en particulier un avion ou un hélicoptère,
   - un filtre pour la filtration liquide ou gazeuse,
   - un radôme ou une pièce protégeant une antenne de radio ou de radar.

L'invention propose également un procédé selon la revendication 12 de surveillance de l'état physique d'une pièce fragile, ledit procédé comportant les étapes suivantes :
1) à un instant initial, fixation d'un capteur de déformation sur la pièce fragile de manière à constituer un dispositif selon l'invention ;
2) calibration du dispositif de manière à déterminer une relation entre ledit état physique et une propriété du capteur de déformation ;
3) à un instant actualisé, mesure de ladite propriété et, à partir de ladite relation, détermination dudit état physique à l'instant actualisé.

L'étape 3) peut être renouvelée, deux instants actualisés successifs étant par exemple séparés de plus de 1 minute, 1 heure, une journée, ou une semaine.

Un procédé sur l'invention peut encore comporter une ou plusieurs des caractéristiques optionnelles suivantes :
- ladite propriété est une impédance, de préférence une résistance ;
- ledit état physique est relatif à la présence de microfissures ;
- à l'étape 3), on mesure ladite propriété sans contact avec ledit capteur de déformation ;
- à l'étape 3), en fonction de ladite mesure de ladite propriété :
   - on détecte un choc mécanique subi, avant l'étape 3), par la pièce fragile, par exemple pendant un transport de ladite pièce fragile, et/ou on mesure une amplitude dudit choc mécanique ;
   - on détecte une contrainte thermomécanique subie, avant l'étape 3), par la pièce fragile et/ou on mesure une amplitude de ladite contrainte thermomécanique.

L'invention concerne encore un kit, en particulier pour la mise en œuvre d'un procédé de surveillance selon l'invention, ledit kit comportant un dispositif selon l'invention et un appareil de mesure adapté pour mesurer, de préférence sans contact, ladite propriété à l'étape 3).

### Définitions

On appelle « bloc », une pièce présentant une masse supérieure à 20 g, de préférence supérieure à 50 g, voire supérieure à 100 g. On appelle « plaque », une pièce dont la largeur est supérieure à cinq fois l'épaisseur. On appelle « barre », une pièce dont la longueur est supérieure à cinq fois la largeur. On appelle « brique » un bloc qui n'est pas une plaque, ni une barre.

Par « contrainte », on entend une sollicitation exercée sur une pièce fragile, par exemple une sollicitation mécanique comme un choc, thermique ou thermomécanique, une sollicitation chimique ou de corrosion, une force ou un moment de force. Une contrainte peut avoir un effet provisoire ou définitif sur la pièce fragile. Par extension, on appelle « contrainte » l'intensité de cette sollicitation par rapport à la surface de la pièce concernée. Les contraintes Ca, Cs et Ceₘᵢₙ sont appliquées de la même façon sur la pièce fragile. Par exemple, si la contrainte est une action mécanique, cette action est appliquée au même endroit de la pièce fragile, suivant la même direction, seule l'intensité de cette action étant éventuellement différente pour Ca, Cs et Ceₘᵢₙ.

« L'état physique » d'une pièce fragile peut être par exemple « état endommagé » ou « état intègre ». Il peut aussi être plus précis. Par exemple, il peut être « état peu endommagé », « état moyennement endommagé » ou « état fortement endommagé ».

« L'endommagement » d'une pièce fragile est une conséquence irréversible de l'application d'une contrainte sur la pièce fragile. L'endommagement peut en particulier se traduire par des microfissures.

Toute contrainte produisant un endommagement est appelée « contrainte d'endommagement ».

La contrainte d'endommagement qui présente l'intensité la plus faible est dite « contrainte d'endommagement minimale ».

Par « propriété » d'un capteur de déformation, on entend une caractéristique de ce capteur variable en fonction de la géométrie dudit capteur. Classiquement, la propriété du capteur, par exemple son impédance, peut être mesurée électriquement.

Sauf indication contraire, la « résistance » est une résistance électrique, mesurée en Ohms.

Lorsque le capteur de déformation se rompt, on ne considère classiquement pas qu'il se déforme de manière plastique.

Par « pièce fragile », on entend une pièce en un matériau dont le domaine de déformation plastique sous charge avant rupture représente moins de 1% du domaine de déformation élastique, de préférence est sensiblement nul. Autrement dit, la largeur de la plage des contraintes conduisant à une déformation plastique sans rupture représente moins de 1% de la largeur de la plage des contraintes conduisant à une déformation élastique.

Un matériau peut être composite ou monolithique selon qu'il comporte ou non des fibres. En particulier, il peut être un « Composite à Matrice Céramique », ou « CMC », c'est-à-dire en un produit composé de fibres liées entre elles par une matrice céramique.

Pour un matériau monolithique, la charge appliquée est typiquement une charge en compression. Dans le cas d'un composite céramique, par exemple un composite à matrice céramique ou «CMC » , la charge est appliquée en traction, l'allongement étant mesuré alors dans le sens des fibres.

On entend par « matériau céramique » tout matériau non métallique et non organique. Le diamant, le graphite, le graphène, un carbure et un cermet étant considérés ici comme des matériaux céramiques.

« Comporter », « présenter » ou « comprendre » doivent être interprétés de manière large, non limitative.

### Brève description des dessins

D'autres caractéristiques et avantages de l'invention apparaîtront encore à la lecture de la description détaillée qui va suivre et à l'examen du dessin annexé dans lequel
- la figure 1 [Fig 1] illustre schématiquement un kit selon l'invention comportant un dispositif selon l'invention selon un premier mode de réalisation ;
- la figure 2 [Fig 2] illustre schématiquement un dispositif selon l'invention selon un deuxième mode de réalisation ;
- la figure 3 [Fig 3] illustre schématiquement un dispositif selon l'invention utilisé pour détecter un déplacement relatif entre deux pièces ;
- la figure 4 [Fig 4] illustre schématiquement le fonctionnement un dispositif selon l'invention.

Dans les différentes figures, des références identiques sont utilisées pour désigner des organes identiques ou analogues.

### Description détaillée

### Dispositif

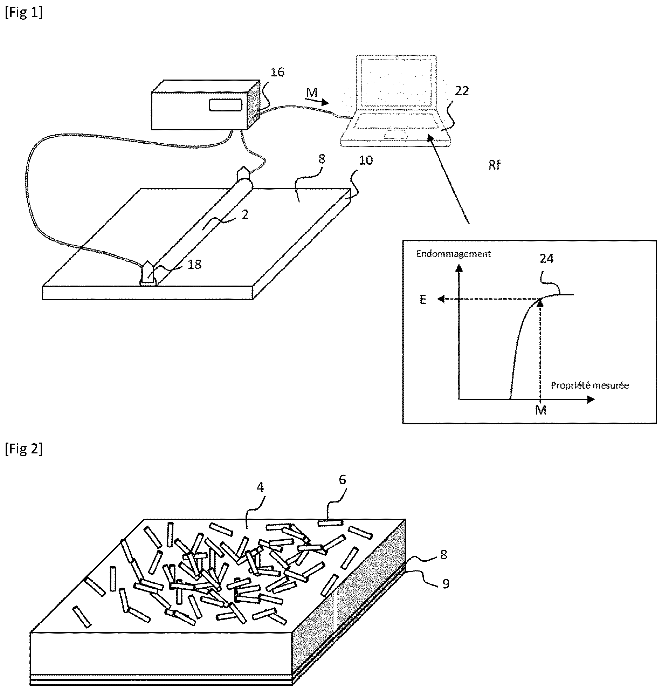

Un dispositif selon l'invention du type représenté sur la figure 1 comporte un capteur de déformation 2 et une pièce fragile 10, sur laquelle est fixé le capteur de déformation.

Le capteur de déformation peut être disposé à cœur et/ou en surface de la pièce fragile. Une pièce fragile, par exemple en un béton réfractaire ou une meule abrasive, peut par exemple accueillir un capteur de déformation à cœur. Pour une meule abrasive, les nanocharges du capteur de déformation peuvent être en particulier dispersées dans la matrice qui lie les grains de la meule. Le capteur de déformation peut ainsi servir pour mesurer la réduction progressive du volume de la meule lors de son utilisation, et évaluer son intégrité.

Le capteur de déformation, de préférence sous la forme d'un patch, peut être également fixé sur le côté de la meule.

De préférence, le capteur de déformation est disposé de manière à ne pas être soumis directement aux contraintes appliquées sur la pièce fragile. Par exemple, si la pièce fragile est une plaque de cuisson, le capteur de déformation n'est de préférence pas contact direct avec la matière à cuire qui est déposée sur la plaque de cuisson.

Cependant, le capteur de déformation doit être disposé de manière à être déformé sous l'effet des contraintes appliquées sur la pièce fragile. Une disposition sur les parties les plus vulnérables de la pièce fragile, par exemple les coins et les arêtes, peut être satisfaisante.

### Pièce fragile

La pièce fragile 10 peut être en un matériau céramique, dont la température de fusion est de préférence supérieure à 1000 °C, de préférence supérieure à 1200°C.

La pièce fragile 10 peut être en un CMC.

De préférence, le CMC comporte une ou plusieurs caractéristiques optionnelles suivantes :
- de préférence, le CMC est fritté ;
- le CMC présente une porosité ouverte, mesurée par imbibition, selon le principe de la poussée d'Archimède, supérieure à 25%, de préférence supérieure à 30% et inférieure à 45%, de préférence inférieure à 35% ;
- le CMC est constitué pour plus de 90%, de préférence pour plus de 95% de sa masse, de préférence pour plus de 98% de sa masse, de préférence pour plus de 99% de sa masse, de préférence pour plus de 99,5% de sa masse d'oxydes ;
- de préférence, le CMC comporte plus de 30%, de préférence plus de 40%, de préférence plus de 50%, de préférence plus de 60% et/ou moins de 70% en volume de fibres ;
- les fibres sont en un matériau oxyde comportant de préférence plus de 50%, de préférence plus de 60%, voire plus de 70%, voire plus de 80%, voire plus de 90% en masse d'Al₂O₃ et/ou de SiO₂ et/ou de ZrO₂, ou sont en un matériau non oxyde, par exemple en SiC, en un autre carbure, en un nitrure ou en un oxynitrure ;
- les fibres sont des fibres choisies parmi les fibres composées pour plus de 95%, de préférence plus de 98%, de préférence plus de 99%, de préférence sensiblement 100% en masse d'alumine, les fibres composées pour plus de 95%, de préférence plus de 98%, de préférence plus de 99%, de préférence sensiblement 100% en masse de silice, de préférence composées pour plus de 95%, de préférence plus de 98%, de préférence plus de 99%, de préférence sensiblement 100% en masse de silice amorphe, les fibres composées pour plus de 95%, de préférence plus de 98%, de préférence plus de 99%, de préférence sensiblement 100% en masse de mullite, les fibres composées pour plus de 95%, de préférence plus de 98%, de préférence plus de 99%, de préférence sensiblement 100% en masse de verre, de préférence lavé ;
- les fibres sont de préférence regroupées sous la forme de fils, un fil comportant typiquement plusieurs centaines à plusieurs milliers de fibres ;
- les fibres, de préférence les fils, sont de préférence continus, et présentent une longueur supérieure à 50 mm, voire supérieure à 100 mm, voire supérieure à 1 m, supérieure à 10 m, supérieure à 100 m ou même supérieure à 1000 mètres ;
- dans un mode de réalisation, les fibres, de préférence les fils sont arrangés sous la forme d'un textile, en particulier d'un textile tissé, non tissé, tricoté ou tressé ;
- la matrice du CMC est composée pour plus de 90%, de préférence pour plus de 95%, de préférence pour plus de 99% d'oxydes, en pourcentage massique ; De préférence la matrice du CMC est composée sensiblement entièrement d'oxydes ;
- la matrice du CMC comprend Al₂O₃ et/ou SiO₂ ;
- de préférence, la matrice du CMC comprend Al₂O₃ et SiO₂ ;
- de préférence, la teneur en Al₂O₃ dans la matrice, en pourcentage en masse sur la base de la matrice, est supérieure à 65%, de préférence supérieure à 70% ;
- de préférence, la teneur en SiO₂ dans la matrice du CMC, en pourcentage en masse sur la base de la matrice du CMC, est supérieure à 15%, de préférence supérieure à 20% et/ou inférieure à 35%, de préférence inférieure à 30% ;
- de préférence, la teneur en oxydes autres que Al₂O₃ et SiO₂ dans la matrice du CMC, en pourcentage en masse sur la base de la matrice du CMC, est inférieure à 3%, de préférence inférieure à 2%, de préférence inférieure à 1% ;
- de préférence, la teneur en Al₂O₃ est supérieure à 60%, de préférence supérieure à 65% ;
- dans un mode de réalisation, la teneur totale en Al₂O₄ et SiO₂ est supérieure à 80%, de préférence supérieure à 85%, de préférence supérieure à 90%, de préférence supérieure à 95%, en pourcentage en masse de la matrice du CMC sur la base des oxydes ;
- dans un mode de réalisation, la silice de la matrice du CMC est amorphe ;
- dans un mode de réalisation, le CMC présente l'analyse chimique suivante, en pourcentage en masse sur la base des oxydes et pour un total de 100%:
   - SiO₂ : 47% - 67%,
   - Al₂O₃ : 32% - 52%,
   - Espèces oxydes autres que Al₂O₃ et SiO₂ : < 5%, de préférence < 4%, de préférence < 3%, de préférence < 2% ;
- le CMC présente une conductivité thermique inférieure à 1,3 W.m⁻¹.K⁻¹, de préférence inférieure à 1 W.m⁻¹.K⁻¹, de préférence inférieure à 0,9 W.m⁻¹.K⁻¹, de préférence inférieure à 0,8 W.m⁻¹.K⁻¹, de préférence inférieure à 0,7 W.m⁻¹.K⁻¹, de préférence inférieure à 0,6 W.m⁻¹.K⁻¹, de préférence inférieure à 0,5 W.m⁻¹.K⁻¹, entre 20°C et 500°C, de préférence entre 20°C et 600°C ;
- le CMC présente une masse volumique apparente supérieure à 1,4 g/cm³, voire supérieure à 1,50 g/cm³ et/ou inférieure à 2 g/cm³, de préférence inférieure à 1,9 g/cm³, de préférence inférieure à 1,80 g/cm³.

La pièce fragile 10 peut présenter une masse supérieure à 500 g, de préférence supérieure à 1 kg et/ou inférieure à 100 kg, inférieure à 50 kg, inférieure à 10 kg, voire inférieure à 5 kg.

La pièce fragile 10 peut présenter une forme quelconque, déterminée en fonction de l'application visée. La pièce fragile 10 peut en particulier présenter la forme d'une brique parallélépipédique rectangle. Elle peut également présenter la forme d'une plaque, par exemple la forme d'une plaque présentant une épaisseur supérieure à 5 mm, de préférence supérieure à 10 mm et/ou inférieure à 20 mm.

Dans une application à un revêtement de four en particulier, la pièce fragile présente de préférence une longueur supérieure à 20 cm et/ou inférieure à 50 cm, une largeur supérieure à 10 cm et/ou inférieure à 30 cm et une épaisseur supérieure 1 cm et/ou inférieure à 5 cm.

Dans une application à une plaque de protection WRT en particulier, la pièce fragile présente de préférence une longueur supérieure à 50 cm et/ou inférieure à 200 cm, une largeur supérieure à 30 cm et/ou inférieure à 50 cm et une épaisseur supérieure 3 mm et/ou inférieure à 10 cm.

Dans une application à un support de cuisson en particulier, la pièce fragile présente de préférence une longueur supérieure à 20 cm et/ou inférieure à 200 cm, une largeur supérieure à 20 cm et/ou inférieure à 70 cm et une épaisseur supérieure à 3 mm, de préférence supérieure à 5 mm et/ou inférieure à 5 cm.

La surface sur laquelle est fixée le capteur de déformation 2 peut être une surface quelconque de la pièce fragile 10. De préférence, cette surface est une surface qui, en service, est susceptible de subir des contraintes mécaniques ou thermomécaniques capables de dégrader la pièce fragile. En particulier, ces contraintes peuvent résulter de températures élevées, de variations de températures ou de chocs mécaniques.

La forme de la surface sur laquelle est fixée le capteur de déformation n'est pas limitative. Elle peut être lisse ou rugueuse, présenter des trous traversants ou être continue, optionnellement présenter des cavités ou des bossages, être développable ou non, être plate ou non.

### Capteur de déformation

Un capteur de déformation 2 est un capteur capable de fournir une information électrique en fonction de sa géométrie. La géométrie du capteur de déformation peut en particulier résulter de son écrasement, de son étirement, de sa flexion ou de sa mise en rotation.

Le capteur de déformation 2 comporte de préférence une matrice de capteur 4 dans laquelle sont dispersées des particules conductrices électriquement, ou « nanocharges » 6, comme illustré sur la figure 2. La matrice de capteur ainsi chargée de particules conductrices présente un comportement électrique différent en fonction de sa géométrie.

Les nanocharges 6 peuvent être des nanocharges décrites dans WO2017/009256. Les nanocharges peuvent être des particules de carbone, de préférence des nanotubes de carbone.

La concentration des nanocharges dans la matrice de capteur est de préférence déterminée pour que, sous l'effet d'une contrainte exercée sur la pièce fragile, le capteur de déformation se déforme, ce qui modifie le nombre et/ou la qualité des contacts entre les nanocharges, et donc modifie l'impédance, et en particulier la résistivité électrique de la matrice de capteur chargée.

La modification de l'impédance dépend de la concentration et de la forme des nanocharges. De simples mesures de la résistance en fonction de la déformation, pour une poudre de nanocharges, permettent de déterminer une concentration de nanocharges adaptée à l'application visée.

Plus précisément, le capteur de déformation 2 présente classiquement un comportement élastique tant que la contrainte appliquée Ca sur la pièce fragile est inférieure à une contrainte « de seuil » Sc. Au-delà de la contrainte de seuil, il se déforme plastiquement. Après l'application d'une contrainte Ca inférieure à la contrainte de seuil Sc et le retour au repos (absence de contrainte appliquée), le capteur de déformation retrouve donc sa géométrie initiale tant que la contrainte de seuil n'a pas été atteinte ou dépassée.

Selon l'invention, le capteur de déformation commence à se déformer plastiquement avant que la contrainte appliquée Ca sur la plaque fragile n'atteigne la contrainte d'endommagement minimale *Ceₘᵢₙ.* Autrement dit, *Cs < Ce*_{*mi*n}. En cas d'application d'une contrainte Ca supérieure ou égale à la contrainte d'endommagement minimale *Ceₘᵢₙ,* le capteur de déformation se déforme donc plastiquement, et conserve ainsi un « souvenir physique » de cette application. Comme décrit ci-après, la propriété mesurée à l'étape 3) permet dès lors de détecter, au moyen de la courbe de calibration, qu'une telle contrainte a été appliquée, et donc que la pièce fragile est endommagée.

La contrainte de seuil Cs ne doit cependant pas être trop éloignée de la contrainte d'endommagement minimale. En effet, tout dépassement de la contrainte de seuil par la contrainte appliquée conduit à une dégradation irréversible du capteur de déformation. C'est pourquoi (Ceₘᵢₙ - Cs)/Cs doit être inférieur à 20%, de préférence le plus faible possible. La tolérance (Ceₘᵢₙ - Cs)/Cs dépend de l'application visée.

Dans un mode de réalisation, la matrice de capteur est en un matériau polymère, en particulier si la pièce fragile est destinée à être utilisée à une température inférieure à 200°C, par exemple si la pièce fragile est une pièce de protection anti-abrasion.

Dans un mode de réalisation, la matrice de capteur est en une matière thermoplastique ou thermodurcissable, en particulier une matière décrite dans WO2017/009256.

Dans un mode de réalisation, la matrice de capteur est en un matériau céramique, en particulier si la pièce fragile est destinée à être utilisée à une température supérieure à 200°C, par exemple si la pièce fragile est une pièce d'un revêtement réfractaire. De préférence, la matrice de capteur est en un matériau céramique résistant à une température de 1500°C.

Le capteur de déformation peut être fabriqué *in situ.* La matrice de capteur est alors directement en contact avec la pièce fragile :
Dans un mode de réalisation, un liquide précurseur de la matrice de capteur chargée de nanocharges (c'est-à-dire permettant, après durcissement, d'obtenir ladite matrice) est appliqué sur la pièce fragile, puis durci, de préférence par séchage, pour former la matrice de capteur chargée de nanocharges. Le liquide précurseur peut être déposé sur la pièce fragile par tout moyen, par exemple manuellement, en particulier avec un pistolet à colle, ou de manière automatisée. Toutes les méthodes connues pour déposer un liquide peuvent être utilisées.

Le capteur de déformation peut être fabriqué en déposant sur la pièce fragile, en particulier sur une pièce réfractaire, un film précurseur d'une matrice céramique chargée de nanocharges, puis en frittant ce film à 1000°C sous atmosphère neutre.

Le capteur de déformation peut être aussi fabriqué avant d'être fixé sur la pièce fragile :
Le capteur de déformation peut notamment présenter la forme d'une plaque mince frittée constituée d'une matrice céramique chargée de nanocharges et qui est collée avec une colle réfractaire sur la pièce fragile, par exemple une tuile céramique avant usage.

Dans un mode de réalisation alternatif, le capteur de déformation présente la forme d'un patch, c'est-à-dire comporte un support 8, par exemple une bande ou une nappe, qui peut être fixé sur la pièce fragile et qui porte la matrice de capteur 4 contenant les nanocharges 6.

Le support 8 peut présenter une surface supérieure à 10 mm par 10 mm et une épaisseur inférieure à 1 mm, voire inférieure à 500 micromètres.

Une face du support peut être revêtue d'un adhésif pour être facilement fixée sur la pièce fragile.

WO2017/009256 décrit un capteur de déformation qui se présente de préférence sous la forme d'un patch. Cependant, le patch de WO2017/009256 est préconisé pour suivre la déformation de tissus comme des voiles de bateau ou pour anticiper la rupture de pales, de mats d'éolienne, d'ailes, de tronçons d'avions, de mats, de flotteurs, d'hydrofoils de voilier, de châssis ou de caisses de voiture. Dans ces applications, la pièce sur laquelle est fixé le patch n'est classiquement pas fragile. Le patch peut avantageusement suivre et mesurer les déformations de cette pièce. Mais des essais ont montré que le patch décrit dans WO2017/009256 n'est pas adapté au suivi de l'endommagement de pièces fragiles. Son comportement reste en effet élastique jusqu'à la rupture de la pièce fragile.

Ce patch, ou, de manière générale, tout patch dont le comportement reste élastique jusqu'à la rupture de la pièce fragile, peut être cependant utilisé en fixant le support sur une couche d'interfaçage 9 présentant une déformation plastique à l'approche de la rupture de la pièce fragile. Le couche d'interfaçage est alors fixée sur la pièce fragile.

L'ensemble constitué du patch 4-6-8 et de la couche d'interfaçage 9 forme alors un capteur de déformation 2 adapté à l'invention.

La couche d'interfaçage 9 peut être en particulier une colle comportant un polymère thermodurcissable, thermoplastique ou élastomère réticulable. De préférence, lorsque le polymère est thermodurcissable, son taux de réticulation est supérieur à 75%, voire supérieur à 90%. De préférence, lorsque le polymère est thermoplastique, son taux de cristallinité varie de 0% à 80%. De préférence encore, la colle comporte plus de 50% en masse de polymère(s) (polyuréthane, époxyde), voire de géopolymère(s).

L'épaisseur de la couche d'interfaçage 9 disposée entre le patch et la pièce fragile est de préférence constante, de préférence supérieure à 0,1 mm et/ou inférieure à 2 mm, de préférence inférieure à 1 mm. De préférence, on étend la couche d'interfaçage sur toute la surface du patch qui est en appui sur la pièce fragile.

La nature de la couche d'interfaçage 9 est adaptée au comportement de la pièce fragile. Avantageusement, un même patch peut ainsi être utilisé pour différentes pièces fragiles ou pour différentes applications, en modifiant seulement la couche d'interfaçage 9.

De préférence, la couche d'interfaçage 9 présente une courbe « déformation-contrainte de traction » proche de celle de la pièce fragile, au moins dans le domaine de température dans lequel il est prévu d'utiliser la pièce fragile, et de préférence depuis la température ambiante. La couche d'interfaçage se déforme donc de la même façon que la pièce fragile.

Bien entendu, la couche d'interfaçage est choisie pour ne pas se rompre avant le début de l'endommagement de la pièce fragile.

Pour choisir une couche d'interfaçage, on peut coller des dits patchs sur des pièces fragiles avec différentes colles, pour constituer des dispositifs de test identiques, puis choisir celle qui permet au capteur de déformation de conserver un comportement élastique jusqu'à des contraintes les plus proches possibles de la contrainte d'endommagement minimale, puis d'adopter un comportement plastique au-delà de la contrainte d'endommagement minimale.

L'homme du métier sait modifier la limite d'élasticité d'une colle. De manière générale, le comportement d'une colle peut être modifié en ajustant sa composition, par exemple en modifiant sa quantité de matériaux organiques (polymères thermodurcissables, thermoplastiques ou élastomères réticulants), d'agents accélérateurs, de retardants ou de fluidifiants. **Il** est aussi possible de la charger, en particulier avec une charge en élastomère ou constituée de fibres polymères ou minérales.

De préférence, la déformation du capteur de déformation 2 est guidée par la déformation de la matrice de capteur 4 et/ou par la déformation de la couche d'interfaçage 9. Autrement dit, le capteur de déformation se déforme élastiquement ou plastiquement selon que la matrice de capteur et/ou la couche d'interfaçage se déforme(nt) élastiquement ou plastiquement, respectivement.

De préférence, que le capteur de déformation soit fabriqué *in situ* ou non, il présente une propriété électrique variable en fonction de sa géométrie, par exemple de son allongement.

De préférence, le capteur de déformation est passif, c'est-à-dire qu'il ne comporte aucune source d'énergie. Le capteur de déformation peut en particulier former un circuit conducteur électrique fermé sur lui-même, de préférence conformé pour être lisible par induction magnétique
De préférence encore, le capteur de déformation comporte des bornes de connexion 18 sont prévues pour faciliter le branchement d'un appareil de mesure 16.

Un capteur de déformation résistif électriquement permet avantageusement une mesure en temps réel, de manière simple, par la seule mesure d'une résistance (ou, de manière équivalente, d'une résistivité électrique).

Le capteur de déformation n'est cependant pas nécessairement un capteur dont on mesure une propriété électrique. Dans un mode de réalisation, le capteur de déformation comporte des « micropiezos » présentant une impédance acoustique variable en fonction de la géométrie du capteur. Ce type de capteur, de type « SAW », en anglais « surface acoustic wave », nécessite l'application d'une sollicitation, par exemple sous forme d'énergie mécanique, afin de faire vibrer la pièce fragile, puis la mesure de l'atténuation du signal acoustique dans la pièce fragile.

### Kit

Un kit selon l'invention comporte un dispositif selon l'invention et un appareil de mesure 16 adapté pour mesurer ladite propriété à l'étape 3), par exemple au moyen de câbles le connectant aux bornes de connexion 18 (figure 1), mais de préférence sans contact.

L'appareil de mesure 16 est également connecté à un appareil d'analyse 22, c'est-à-dire un appareil comportant classiquement un processeur, une mémoire informatique et un logiciel configurés pour déterminer, à partir de la propriété mesurée, un état de la pièce fragile.

L'appareil de mesure 16 peut être alternativement physiquement intégré dans l'appareil d'analyse.

### Procédé

Le procédé de fabrication découle directement de la description qui précède.

**À l'étape 1),** on fixe un capteur de déformation 2 sur une pièce fragile 10, de manière à constituer un dispositif selon l'invention, par exemple du type représenté sur la figure 2.

**A l'étape 2),** le dispositif est calibré, c'est-à-dire qu'on détermine une courbe de calibration 24 fournissant, pour chaque réponse possible du capteur de déformation 2, une information sur l'état physique de la pièce fragile, et en particulier sur l'endommagement, et de préférence une information sur l'amplitude de l'endommagement.

La détermination de la courbe de calibration (ou « calibration ») est de préférence effectuée à un instant de référence antérieur à la première mise en service du dispositif selon l'invention.

De préférence, la calibration est réalisée sur des dispositifs de test identiques au dispositif selon l'invention et qui, chacun, subissent une contrainte particulière. On observe alors l'endommagement éventuel de la pièce fragile. De préférence, on mesure l'endommagement éventuel, de préférence sans contact, de préférence au moyen de rayons X, d'ultrasons ou d'un procédé par résonnance.

Par exemple en appliquant des contraintes d'intensité croissante, on détecte ainsi la contrainte d'endommagement minimale au-delà de laquelle toute contrainte conduit à un endommagement de la pièce fragile, ainsi que la réponse correspondante du capteur de déformation.

L'augmentation de l'endommagement, par exemple la multiplication des microfissures, conduit à une déformation croissante du capteur de déformation, et donc conduit à mesurer une propriété du capteur de déformation croissante. Dans la région de la courbe de calibration correspondant à une déformation plastique du capteur de déformation, il est donc avantageusement possible d'établir une relation entre une mesure de ladite propriété et l'amplitude de l'endommagement.

**A l'étape 3),** on interroge, à l'instant actualisé et avec l'appareil de mesure 16, le capteur de déformation 2, pour mesurer une de ses propriétés dont la valeur dépend de la géométrie du capteur de déformation.

L'intervalle temporel entre l'instant de calibration et l'instant actualisé peut être supérieur à une semaine, deux semaines, un mois, deux mois et/ou inférieur à un an, ou six mois.

Si ladite propriété est une résistance électrique de la matrice de capteur chargée de nanocharges, on connecte classiquement les deux câbles de l'appareil de mesure 16, classiquement un ohmmètre, aux bornes de connexion 18 (figure 1).

La connexion de l'appareil de mesure aux bornes de connexion peut être désactivable, ce qui est notamment utile lorsque que le contrôle de la pièce fragile est effectué de manière ponctuelle. Elle peut être non-désactivable, c'est-à-dire permanente, en particulier lorsque que le contrôle est sensiblement continu.

Dans un mode de réalisation préféré, la mesure de ladite propriété est effectuée sans contact avec le capteur de déformation. En particulier, la propriété peut être une inductance, qui peut être classiquement mesurée à distance.

La mesure M effectuée par le capteur de déformation, ou « propriété actualisée », est ensuite analysée par l'appareil d'analyse 22, connecté à l'appareil de mesure 16, afin de fournir une information sur l'endommagement éventuel de la pièce fragile. Plus précisément, l'appareil d'analyse utilise la courbe de calibration 24 pour déterminer une information sur l'endommagement E de la pièce fragile.

Selon l'invention telle que revendiquée, si la propriété actualisée est dans la plage qui correspond aux contraintes appliquées conduisant à une déformation élastique du capteur de déformation, l'état de la pièce fragile est considéré comme « satisfaisant ». Sinon, c'est-à-dire si la propriété actualisée est dans la plage qui correspond aux contraintes appliquées conduisant à une déformation plastique du capteur de déformation, l'état de la pièce fragile est considéré comme « insatisfaisant ». Dans ce dernier cas, la courbe de calibration permet d'évaluer le niveau d'endommagement. L'état de la pièce fragile peut être alors par exemple qualifié de « faiblement fissuré », « moyennement fissuré » et « fortement fissuré », selon la valeur de la propriété actualisée.

En fonction de l'état de la pièce fragile ainsi déterminé, il est possible d'identifier le type de défaut dans la pièce fragile et/ou de décider si la pièce fragile reste utilisable ou si elle doit être remplacée et/ou de planifier des opérations de maintenance.

Dans un mode de réalisation, les états physiques déterminés selon l'invention sont traités statistiquement, par exemple au moyen d'algorithmes d'intelligence artificielle, de manière à améliorer la prise de décision.

### Exemples d'applications non limitatifs

### Détection et mesure de microfissures ou d'écaillage

Un patch tel que décrit dans WO2017/009256 est fixé sur une plaque céramique de SiC au moyen d'une couche de colle thermodurcissable à base époxyde. L'épaisseur de la couche de colle est sensiblement constante et inférieure à environ 0,5 mm.

Le dispositif ainsi fabriqué est calibré, comme décrit ci-dessus.

Il est ensuite soumis à des contraintes mécaniques croissantes de manière à déformer la matrice de capteur, et donc la distribution des nanocharges. Après chaque application d'une contrainte puis retour au repos, on mesure la résistance électrique du capteur de déformation.

Tant que la contrainte ne conduit pas à déformer plastiquement la plaque céramique, la résistance du capteur de déformation est sensiblement constante. Au-delà, la résistance du capteur de déformation augmente.

Il est ainsi possible d'en déduire la présence de microfissures. La valeur de la résistance permet également, au moyen de la courbe de calibration, d'évaluer l'ampleur de la microfissuration.

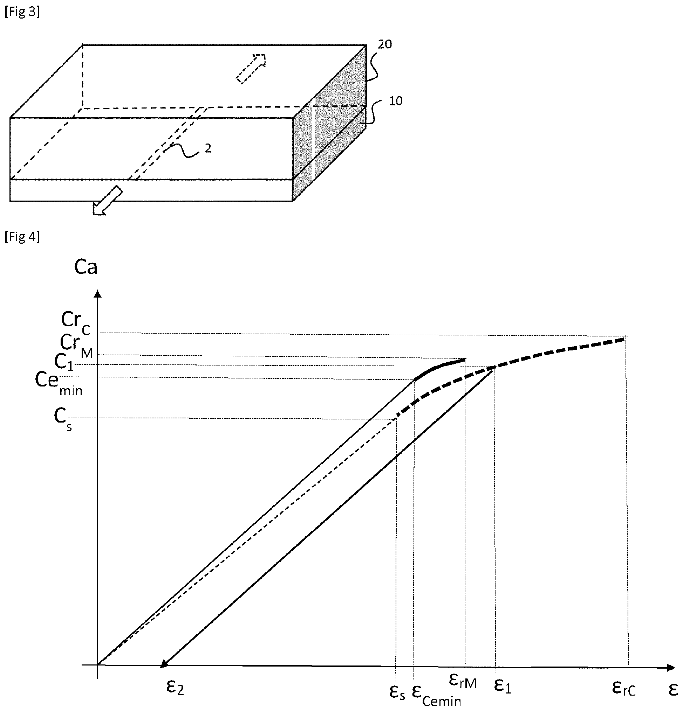

La figure 4 illustre la déformation ε de la pièce fragile (trait plein) et du capteur de déformation (trait interrompu) en fonction de la contrainte Ca appliquée sur la pièce fragile.

Cr_{M} désigne la contrainte de rupture de la pièce fragile et ε_{rM} désigne la déformation maximale, correspondant à la rupture de la pièce fragile. On considère que la fin du domaine de déformation élastique et le début du domaine de déformation plastique de la pièce fragile sont définis par Ceₘᵢₙ, les contraintes supérieures ou égales à Ceₘᵢₙ conduisant à l'endommagement de la pièce fragile.

Cr_{c} désigne la contrainte de rupture du capteur de déformation et ε_{rC} désigne la déformation maximale du capteur de déformation, correspondant à sa rupture (dans l'hypothèse où la rupture de la pièce fragile n'a pas conduit à détériorer le capteur de déformation).

Cs désigne la contrainte de seuil, la déformation du capteur de déformation étant élastique ou plastique selon que la contrainte appliquée à la pièce fragile est inférieure ou supérieure ou égale à Cs, respectivement. εₛ désigne la déformation du capteur de déformation lorsque la contrainte de seuil est appliquée.

Les parties des courbes qui correspondent à des déformations plastiques sont en gras.

On constate que, de préférence, la déformation plastique de la pièce fragile ne se produit que lorsque le capteur de déformation subit lui-même une déformation plastique. Tout endommagement de la pièce fragile est alors mémorisé par le capteur de déformation.

La contrainte d'endommagement minimale de la pièce fragile Ceₘᵢₙ est inférieure à la contrainte Cr_{c} appliquée sur la pièce fragile et qui conduit à la rupture du capteur de déformation.

De préférence, la déformation plastique du capteur de déformation commence cependant alors que la pièce fragile est encore en déformation élastique. Le capteur déformation peut ainsi mémoriser une contrainte élevée n'ayant cependant pas conduit à un endommagement de la pièce fragile.

De préférence, le domaine de déformation plastique du capteur de déformation se termine après que la pièce fragile se soit rompue. Le capteur déformation peut ainsi mémoriser toute contrainte ayant conduit à un endommagement de la pièce fragile.

La figure 4 permet d'illustrer comment le capteur de déformation réagit sous l'application d'une contrainte Ca croissante appliquée sur la pièce fragile : Il se déforme d'abord élastiquement, jusqu'à application d'une contrainte de seuil Cs sur la pièce fragile (trait interrompu fin, jusqu'à la déformation εₛ), puis plastiquement.

En particulier, la déformation du capteur de déformation est plastique lorsque la contrainte appliquée sur la pièce fragile atteint Ceₘᵢₙ et que la pièce fragile commence à se dégrader. Cette déformation plastique du capteur de déformation permet, si la contrainte cesse, de conserver une trace que des contraintes conduisant à un endommagement de la pièce fragile ont été atteintes.

Si la contrainte continue d'augmenter, elle provoque une déformation plastique de la pièce fragile, en plus de la déformation plastique du capteur de déformation. Elle atteint par exemple la contrainte C₁, correspondant à la déformation ε₁. Lorsque la contrainte diminue ensuite jusqu'à s'annuler, cette déformation plastique se traduit par une déformation résiduelle ε₂ du capteur de déformation, qui mémorise ainsi l'application de la contrainte maximale C₁ appliquée sur la pièce fragile.

La flèche illustre la déformation du capteur de déformation lorsque la contrainte cesse après avoir atteint C₁, supérieure à Ceₘᵢₙ, et montre que la plasticité du capteur de déformation a mémorisé l'endommagement de la pièce fragile.

Si la contrainte continue d'augmenter, elle atteint Cr_{M} et la pièce fragile de rompt.

Cr_{c} désigne la contrainte appliquée à la pièce fragile et qui conduirait à la rupture du capteur de déformation si la pièce fragile n'était pas rompue. (En pratique, la rupture de la pièce de blindage conduit généralement à la rupture du capteur de déformation).

### Exemple de détection et de mesure de l'endommagement d'une céramique

Trois séries de 5 pièces en carbure de silicium en forme de plaques carrées de 200 mm de côté, de 7,5mm d'épaisseur, issues du même lot de fabrication, ont été instrumentées, chacun avec un capteur de déformation résistif QRS, sous forme de patch, fourni par la société Sense-In placé au centre en face arrière d'impact. Chaque capteur de déformation a été collé sur la face arrière des pièces en carbure de silicium, au centre de ladite face arrière, au moyen d'une résine époxy bi-composant fournie par Elantas sous la référence ElanTech AS89.1/AW89.2. Une couche intermédiaire textile en aramide a ensuite été collée sur ladite face arrière avec une résine époxy. Une plaque d'amortissement en un composite thermoplastique a été enfin collée sur ladite couche intermédiaire. Chaque plaque ainsi constituée a ensuite été enfermée dans une enveloppe textile en aramide, pour constituer une plaque d'essai.

Différentes contraintes ont été appliquées sur les plaques d'essai :
La première série de plaques d'essai a subi la projection d'une balle de papier d'environ 2 g, lancée à environ 10 m/s au centre de la face avant des pièces en carbure de silicium et perpendiculairement à ladite face avant. La deuxième série de plaques d'essai a subi la projection d'une bille d'acier d'environ 30 g, lancée à environ 50 m/s au centre de la face avant des pièces en carbure de silicium et perpendiculairement à ladite face avant. La troisième série de plaques d'essai a subi la chute d'une masse de 50 kg, d'une hauteur de 50 cm, au centre de la face avant des pièces en carbure de silicium, disposées à l'horizontal.

La résistance électrique du capteur de déformation a été mesurée en continu au moyen d'un système d'acquisition HBM MX840A connecté par fils.

L'aspect externe des pièces de carbure de silicium a été observé après chaque essai d'impact et une radiographie aux rayons X a été effectuée à l'aide d'un appareil de détection de type HI-SCAN 6046si fourni par Smiths detection selon un mode standard de résolution.

Pour ce dispositif (un dispositif étant constitué par une pièce en carbure de silicium, le capteur de déformation associé et la colle utilisée pour la fixation du capteur de déformation sur la pièce en carbure de silicium), les contraintes Ceₘᵢₙ et Cs ont été déterminées de la manière suivante :
Des échantillons représentatifs de la série sont soumis à des contraintes Ca croissantes, résultant de la projection d'un projectile au centre de la face avant de l'échantillon, perpendiculairement à ladite face avant.

La contrainte Ca dépend de la masse m du projectile, de la surface S d'impact du projectile sur la face avant, et de l'accélération A mesurée sur la face avant de la pièce. Elle est calculée comme suit : *Ca = m x A* / *S*, Ca étant exprimée en MPa ; m en Kg, A en m/s² et S en mm².

La masse du projectile est déterminée à l'aide d'une balance de précision au milligramme.

La surface d'impact est mesurée à l'aide d'un réglet sur la pièce après impact et correspond à la trace laissée par le projectile sur l'enveloppe textile en aramide. Quand celle-ci n'est pas visible, avant l'étape de projection, l'enveloppe est marquée avec des graduations de manière à déterminer précisément (au mm près) la surface d'impact à l'aide d'une caméra rapide.

L'accélération est mesurée par un accéléromètre consistant en une cellule collée sur la face avant, ou « face d'impact », de l'échantillon. Celui-ci est collé à une distance de 100 mm du point d'impact.

Après application d'une contrainte, l'échantillon est analysé aux rayons X.

La contrainte d'endommagement minimal Ceₘᵢₙ a été estimée par la contrainte Ca à partir de laquelle un défaut au moins égal à 2 mm est détecté par radiographie aux rayons X.

La contrainte seuil Cs a été déterminée, par lecture de la variation de résistance électrique du capteur de déformation, comme la contrainte à partir de laquelle la variation de résistance électrique n'est plus réversible alors que la pièce n'est pas endommagée après vérification aux rayons X, c'est-à-dire à partir de laquelle le capteur de déformation ne reprend plus ses dimensions initiales avant application de la contrainte.

Les résultats sont reportés dans le tableau ci-dessous :

| | |
|---|---|
| Epaisseur (mm) | 7,5 |
| Ceₘᵢₙ /Cs | 1,1 |
| Projection d'une balle papier de 2g à 10m/s | VE 0D |
| Projection d'une bille d'acier de 30g à 50m/s | VL 1D |
| Chute d'une masse de 50Kg de 50cm de haut | VM 2D |

### Abréviations

- VE: Variation relative de la résistance électrique pendant le choc, puis retour à l'état initial
- VL: Variation relative de résistance électrique pendant le choc, puis maintien d'un écart de résistance électrique par rapport à l'état initial avant le choc
- VM: Variation importante de résistance électrique pendant le choc : après essai, la résistance électrique était supérieure à 2 fois la résistance électrique initiale, avant essai
- 0D: Aucun endommagement détecté ni visible à l'œil nu, ni via le cliché de radiographie X
- 1D: pas d'endommagement visible à l'œil nu mais amorce nette de fissure détectée via la radiographie X
- 2D: endommagement visible extérieurement correspondant à une fracturation de la pièce en carbure de silicium

Les essais avec projection de la balle en papier montrent que, sous l'effet d'un choc léger, le capteur de déformation ne mémorise pas les petites contraintes qui ne conduisent pas à un endommagement de la plaque en carbure de silicium. **Il** se déforme élastiquement et reste pleinement opérationnel sous l'effet de ces contraintes.

Les essais avec projection de la bille d'acier montrent que, sous l'effet d'un choc modéré, le capteur de déformation s'est déformé plastiquement, et a ainsi mémorisé le choc.

Cette série d'essais montre que le capteur de déformation permet de détecter un endommagement de la plaque en carbure de silicium invisible à l'œil nu, ce qui est particulièrement avantageux.

### Détection et mesure dans une application à une turbine à gaz

Aucun dispositif ne permet aujourd'hui de contrôler rapidement, à tout moment et à moindre coût, l'intégrité des pièces en céramique utilisées dans des applications où la température excède 350°C.

Dans le cas de turbines terrestres, les tuiles en céramique sont positionnées sur les parois de la chambre de combustion. Ces tuiles sont soumises à un fort gradient thermique (environ 1500°C en face avant - face dans la chambre de combustion - et environ 600°C en face arrière - face en contact avec la paroi de la chambre de combustion). La détérioration soudaine de l'une de ces tuiles peut avoir de sérieuses conséquences, en particulier si un débris de tuile vient endommager une des pâles de la turbine.

Le capteur de déformation peut être fixé sur la face arrière d'une tuile céramique de turbine à gaz.

La précision du capteur de déformation permet de détecter de faibles variations de la propriété actualisée, en particulier de la résistance électrique du capteur de déformation, et donc d'anticiper la survenue de phénomènes préjudiciables.

Dans cette application, la matrice du capteur est de préférence en un matériau céramique, de préférence en un carbure de Silicium et/ou un nitrure de Bore afin de résister à la température. La matrice du capteur est de préférence déposée sous forme de film sur la tuile, puis frittée à au moins 1000°C, de préférence sous atmosphère neutre.

### Détection et mesure de l'utilisation d'un support de cuisson

Un capteur de déformation est fixé sur un support de cuisson. Lorsque le support de cuisson est utilisé, il se déforme progressivement, jusqu'à modifier de manière plastique le capteur de déformation. Le capteur de déformation conserve ainsi un souvenir, ou « une trace », de l'utilisation du support de cuisson.

Par ailleurs, la résistance du capteur de déformation peut continuer d'évoluer lors des utilisations suivantes. Il est donc possible d'évaluer l'utilisation globale antérieure d'un support de cuisson, c'est-à-dire son niveau de fatigue.

### Détection d'un choc préjudiciable pendant un transport ou une manipulation

Des capteurs d'accélération (accéléromètres) sont classiquement utilisés pour détecter l'occurrence d'une accélération anormale, et donc de chocs. Cependant, ces capteurs sont peu précis et ne donnent aucune indication quant à l'intégrité des pièces. Certaines dégradations non-visibles à l'œil nu, par exemple des microfissurations, peuvent cependant fortement diminuer les propriétés mécaniques.

La capacité du capteur de déformation à conserver une trace des évènements subis permet de l'utiliser pour détecter, voire mesurer, des chocs mécaniques subis par la pièce fragile lors d'un transport.

Une simple mesure de la propriété actualisée permet ainsi de vérifier que la pièce fragile ne s'est pas dégradée.

### Contrôle d'un assemblage

Dans un mode de réalisation particulièrement avantageux, le capteur de déformation est interposé à l'interface entre la pièce fragile et une autre pièce 20, fragile ou non, comme représenté sur la figure 3. Fixé sur ces deux pièces, le capteur de déformation 2 permet avantageusement de détecter et/ou de mesurer l'effet de contraintes affectant chacune des deux pièces.

En outre, le capteur de déformation étant collé sur chacune des pièces, il se déforme sous l'effet d'un déplacement relatif de l'une de ces pièces par rapport à l'autre. Il peut donc être utilisé pour détecter et/ou mesurer un tel déplacement relatif.

Comme cela apparaît clairement à présent, l'invention fournit donc un procédé permettant, de manière simple, de
- détecter l'application passée d'une contrainte d'endommagement sur une pièce fragile, par exemple d'un choc thermique ou mécanique ;
- évaluer ladite contrainte et/ou ledit endommagement.

L'invention est avantageusement applicable pour des pièces fragiles présentant des géométries variées. En outre, il ne modifie pas sensiblement l'encombrement de ces pièces.

Enfin, il permet de détecter des déformations de faibles amplitudes, le capteur de déformation étant très sensible. Il permet donc la détection de signaux faibles, et donc d'anticiper une dégradation catastrophique de la pièce fragile.

Bien entendu, l'invention n'est pas limitée aux modes de réalisation décrits et représentés, fournis à des fins illustratives seulement.

En particulier, la position du capteur de déformation sur la pièce fragile et le nombre de capteurs de déformation ne sont pas limitatifs.

La communication entre le capteur de déformation et l'appareil de mesure et/ou entre l'appareil de mesure et l'appareil d'analyse peut être réalisée de façon filaire ou sans-fil, par exemple par wi-fi ou Bluetooth.

## Revendications

1. Dispositif comportant une pièce (10) et un capteur de déformation (2) fixé sur la pièce, **caractérisé en ce que** :
- la pièce, dite « pièce fragile » (10) est en un matériau céramique et/ou en un verre et/ou en une vitrocéramique et/ou en un composite à matrice céramique et
- le capteur de déformation (2) est configuré pour se déformer de manière plastique sous l'effet d'au moins une contrainte appliquée à la pièce fragile et conduisant à un endommagement de la pièce fragile, de manière à mémoriser ledit endommagement de la pièce fragile, le capteur de déformation étant configuré pour se déformer sous l'effet d'une contrainte Ca appliquée sur la pièce fragile,
de manière élastique lorsque la contrainte appliquée Ca est inférieure ou égale à une contrainte de seuil Cs, et
de manière plastique lorsque la contrainte appliquée Ca est supérieure à la contrainte de seuil Cs,
la contrainte de seuil étant telle que Cs < Ce*ₘᵢₙ*,
*Ceₘᵢₙ* étant la contrainte d'endommagement minimale de la pièce fragile,
le capteur de déformation comportant une matrice de capteur (4) et un ensemble de particules conductrices électriquement (6) réparties au sein de ladite matrice de capteur, l'ensemble des particules conductrices électriquement constituant un réseau conducteur dont une propriété électrique est fonction d'un agencement des particules conductrices constituant le réseau conducteur, ledit agencement étant modifiable **en ce que**, sous l'effet d'une contrainte appliquée sur la pièce fragile, l'agencement des particules conductrices du réseau conducteur est modifié de sorte qu'il en résulte une modification de ladite propriété électrique du réseau conducteur.

2. Dispositif selon la revendication immédiatement précédente, dans lequel (*Ceₘᵢₙ* - Cs)/Cs < 20%.

3. Dispositif selon l'une quelconque des revendications précédentes, dans lequel la contrainte d'endommagement minimale est la contrainte à partir de laquelle la pièce fragile commence à se microfissurer.

4. Dispositif selon l'une quelconque des revendications précédentes, dans lequel la pièce fragile est en un matériau présentant un domaine de déformation plastique sous charge avant rupture et un domaine de déformation élastique, le domaine de déformation plastique représentant moins de 1% du domaine de déformation élastique.

5. Dispositif selon l'une quelconque des revendications précédentes, dans lequel le capteur de déformation présente une impédance variable en fonction de ladite contrainte appliquée sur la pièce fragile.

6. Dispositif selon l'une quelconque des revendications précédentes, dans lequel le capteur de déformation forme un circuit conducteur électriquement, fermé sur lui-même et dépourvu de source d'énergie électrique.

7. Dispositif selon l'une quelconque des revendications précédentes, dans lequel les particules conductrices électriquement (6) sont des nanotubes de carbone.

8. Dispositif selon l'une quelconque des revendications précédentes, dans lequel la matrice de capteur est fixée sur un support (8), le support est fixé à une couche d'interfaçage (9) et la couche d'interfaçage est fixée sur la pièce fragile (2), la couche d'interfaçage étant configurée pour se déformer sous l'effet de la contrainte Ca appliquée sur la pièce fragile,
de manière élastique lorsque la contrainte appliquée Ca est inférieure ou égale à la contrainte de seuil Cs, et
de manière plastique lorsque la contrainte appliquée Ca est supérieure à la contrainte de seuil *Cs.*

9. Dispositif selon l'une quelconque des revendications précédentes, comportant une deuxième pièce (20), le capteur de déformation (2) étant fixé à la pièce fragile et à ladite deuxième pièce, de manière à détecter et/ou mesurer un déplacement relatif de l'une de ces pièces par rapport à l'autre.

10. Dispositif selon l'une quelconque des revendications précédentes, dans lequel le capteur de déformation est configuré pour ne pas être détruit par l'application d'une contrainte quelconque sur la pièce fragile qui ne conduit pas à la rupture de la pièce fragile.

11. Dispositif selon l'une quelconque des revendications précédentes, dans lequel la pièce fragile est choisie dans un groupe constitué par une pièce d'un échangeur thermique, un support de cuisson, une tuile ou une pièce de protection d'une chambre de turbine de combustion, un bloc réfractaire de four, une pièce de protection contre l'abrasion, un abrasif, un outil de coupe en céramique, un élément de pompe ou de circuit hydraulique en céramique, un isolant électrique, en particulier sous la forme d'un tube, un carreau de parement, un vitrage, un filtre pour la filtration liquide ou gazeuse, un radôme ou une pièce protégeant une antenne de radio ou de radar.

12. Procédé de surveillance de l'état physique d'une pièce, **caractérisé en ce que** ledit procédé comporte les étapes suivantes :
1) à un instant initial, fixation d'un capteur de déformation (2) sur la pièce (10) de manière à constituer un dispositif selon l'une quelconque des revendications précédentes, la pièce étant une dite « pièce fragile » ;
2) calibration du dispositif de manière à déterminer une relation (24) entre ledit état physique et une propriété du capteur de déformation ;
3) à un instant actualisé, mesure de ladite propriété (M) et, à partir de ladite relation (24), détermination dudit état physique (E) à l'instant actualisé,
l'état de la pièce fragile étant considéré :
- comme « satisfaisant » si la propriété à l'instant actualisé est dans la plage qui correspond aux contraintes appliquées sur la pièce conduisant à une déformation élastique du capteur de déformation ou
comme « insatisfaisant » si la propriété à l'instant actualisé est dans la plage qui correspond aux contraintes appliquées sur la pièce conduisant à une déformation plastique du capteur de déformation

13. Procédé selon la revendication immédiatement précédente, dans lequel ladite propriété est une impédance, de préférence une résistance, et/ou ledit état physique est relatif à la présence de microfissures.

14. Procédé selon la revendication immédiatement précédente, dans lequel, à l'étape 3), on mesure ladite propriété sans contact avec ledit capteur de déformation.

15. Procédé selon l'une quelconque des trois revendications immédiatement précédentes, dans lequel, à l'étape 3), en fonction de ladite mesure de ladite propriété :
- on détecte un choc mécanique subi, avant l'étape 3), par la pièce fragile et/ou on mesure une amplitude dudit choc mécanique ; ou
- on détecte une contrainte thermomécanique subie, avant l'étape 3), par la pièce fragile et/ou on mesure une amplitude de ladite contrainte thermomécanique.

## Patentansprüche

1. Vorrichtung, die ein Teil (10) und einen an dem Teil befestigten Verformungssensor (2) umfasst, **dadurch gekennzeichnet, dass**:
- das Teil, "zerbrechliches Teil" (10) genannt, aus einem keramischen Werkstoff und/oder aus einem Glas und/oder aus einer Glaskeramik und/oder aus einem Keramik-Matrix-Verbundwerkstoff ist und
- der Verformungssensor (2) dazu ausgebildet ist, sich unter der Wirkung von mindestens einer auf das zerbrechliche Teil angewendeten und zu einer Beschädigung des zerbrechlichen Teils führenden Spannung plastisch zu verformen, so dass die Beschädigung des zerbrechlichen Teils gespeichert wird, wobei der Verformungssensor dazu ausgebildet ist, sich unter der Wirkung einer auf das zerbrechliche Teil angewendeten Spannung Ca zu verformen, elastisch, wenn die angewendete Spannung Ca kleiner oder gleich einer Schwellenspannung Cs ist, und
plastisch, wenn die angewendete Spannung Ca größer als die Schwellenspannung Cs ist,
wobei die Schwellenspannung dergestalt ist, dass Cs < Ceₘᵢₙ,
wobei Ceₘᵢₙ die minimale Beschädigungsspannung des zerbrechlichen Teils ist,
wobei der Verformungssensor eine Sensormatrix (4) und eine Menge elektrisch leitender Partikel (6) umfasst, die innerhalb der Sensormatrix verteilt sind, wobei die Menge elektrisch leitender Partikel ein leitendes Netz bildet, bei dem eine elektrische Eigenschaft von einer Anordnung der das leitende Netz bildenden leitenden Partikel abhängig ist, wobei die Anordnung dadurch änderbar ist, dass unter der Wirkung einer auf das zerbrechliche Teil angewendeten Spannung die Anordnung der leitenden Partikel des leitenden Netzes so geändert wird, dass daraus eine Änderung der elektrischen Eigenschaft des leitenden Netzes resultiert.

2. Vorrichtung nach dem unmittelbar vorhergehenden Anspruch, wobei (Ceₘᵢₙ - Cs)/Cs < 20 %.

3. Vorrichtung nach einem der vorhergehenden Ansprüche, wobei die minimale Beschädigungsspannung die Spannung ist, von der an das zerbrechliche Teil Mikrorisse zu bilden beginnt.

4. Vorrichtung nach einem der vorhergehenden Ansprüche, wobei das zerbrechliche Teil aus einem Werkstoff ist, der einen Bereich plastischer Verformung unter Last vor dem Bruch und einen Bereich elastischer Verformung aufweist, wobei der Bereich plastischer Verformung weniger als 1 % des Bereichs elastischer Verformung ausmacht.

5. Vorrichtung nach einem der vorhergehenden Ansprüche, wobei der Verformungssensors eine in Abhängigkeit von der auf das zerbrechliche Teil angewendeten Spannung variable Impedanz aufweist.

6. Vorrichtung nach einem der vorhergehenden Ansprüche, wobei der Verformungssensor eine in sich geschlossene und keine elektrische Energiequelle aufweisende elektrisch leitende Schaltung bildet.

7. Vorrichtung nach einem der vorhergehenden Ansprüche, wobei die elektrisch leitenden Partikel (6) Kohlenstoffnanoröhren sind.

8. Vorrichtung nach einem der vorhergehenden Ansprüche, wobei die Sensormatrix auf einem Träger (8) befestigt ist, der Träger an einer Schnittstellenschicht (9) befestigt ist und die Schnittstellenschicht auf dem zerbrechlichen Teil (2) befestigt ist, wobei die Schnittstellenschicht dazu ausgebildet ist, sich unter der Wirkung der auf das zerbrechliche Teil angewendeten Spannung Ca zu verformen,
elastisch, wenn die angewendete Spannung Ca kleiner oder gleich der Schwellenspannung Cs ist, und
plastisch, wenn die angewendete Spannung Ca größer als die Schwellenspannung Cs ist.

9. Vorrichtung nach einem der vorhergehenden Ansprüche, die ein zweites Teil (20) umfasst, wobei der Verformungssensor (2) an dem zerbrechlichen Teil und an dem zweiten Teil befestigt ist, so dass er eine relative Bewegung des einen dieser Teile in Bezug auf das andere detektiert und/oder misst.

10. Vorrichtung nach einem der vorhergehenden Ansprüche, wobei der Verformungssensor dazu ausgebildet ist, durch das Anwenden einer beliebigen Spannung auf das zerbrechliche Teil, die nicht zum Bruch des zerbrechlichen Teils führt, nicht zerstört zu werden.

11. Vorrichtung nach einem der vorhergehenden Ansprüche, **dadurch gekennzeichnet, dass** das zerbrechliche Teil ausgewählt ist aus einer Gruppe bestehend aus einem Teil eines Wärmetauschers, einem Brennhilfsmittel, einer Kachel oder einem Schutzteil einer Turbinenbrennkammer, einem feuerfesten Block eines Ofens, einem Teil zum Schutz vor Abrieb, einem Schleifmittel, einem Schneidwerkzeug aus Keramik, einem Hydraulikkreis- oder Pumpenelement aus Keramik, einem elektrischen Isolator, insbesondere in Form eines Rohrs, einer Verblendungsplatte, einer Verglasung, einem Filter zur Flüssigkeits- oder Gasfiltration, einem Radom oder einem eine Funk- oder Radarantenne schützenden Teil.

12. Verfahren zur Überwachung des physischen Zustands eines Teils, **dadurch gekennzeichnet, dass** das Verfahren die folgenden Schritte umfasst:
1) zu einem Ausgangszeitpunkt, Befestigen eines Verformungssensors (2) an dem Teil (10), so dass eine Vorrichtung nach einem der vorhergehenden Ansprüche gebildet wird, wobei das Teil ein sogenanntes "zerbrechliches Teil" ist;
2) Kalibrieren der Vorrichtung, so dass eine Beziehung (24) zwischen dem physischen Zustand und einer Eigenschaft des Verformungssensors bestimmt wird;
3) zu einem aktualisierten Zeitpunkt, Messen der Eigenschaft (M) und, ausgehend von der Beziehung (24), Bestimmen des physischen Zustands (E) zu dem aktualisierten Zeitpunkt,
wobei der Zustand des zerbrechlichen Teils betrachtet wird:
- als "zufriedenstellend", wenn die Eigenschaft zu dem aktualisierten Zeitpunkt in dem Bereich liegt, der den auf das Teil angewendeten Spannungen entspricht, die zu einer elastischen Verformung des Verformungssensors führen, oder
als "nicht zufriedenstellend", wenn die Eigenschaft zu dem aktualisierten Zeitpunkt in dem Bereich liegt, der den auf das Teil angewendeten Spannungen entspricht, die zu einer plastischen Verformung des Verformungssensors führen

13. Verfahren nach dem unmittelbar vorhergehenden Anspruch, wobei die Eigenschaft eine Impedanz, vorzugsweise ein Widerstand, ist und/oder der physische Zustand sich auf das Vorhandensein von Mikrorissen bezieht.

14. Verfahren nach dem unmittelbar vorhergehenden Anspruch, wobei im Schritt 3) die Eigenschaft ohne Kontakt mit dem Verformungssensor gemessen wird.

15. Verfahren nach einem der drei unmittelbar vorhergehenden Ansprüche, wobei im Schritt 3), in Abhängigkeit von der Messung der Eigenschaft:
- ein mechanischer Stoß detektiert wird, den das zerbrechliche Teil vor dem Schritt 3) erfahren hat, und/oder eine Amplitude des mechanischen Stoßes gemessen wird; oder
- eine thermomechanische Spannung detektiert wird, die das zerbrechliche Teil vor dem Schritt 3) erfahren hat, und/oder eine Amplitude der thermomechanischen Spannung gemessen wird.

## Claims

1. Device comprising a part (10) and a deformation sensor (2) fixed to the part, **characterized in that**:
- the part, referred to as "brittle part" (10) is made of a ceramic material and/or of a glass and/or of a glass-ceramic and/or of a ceramic-matrix composite and
- the deformation sensor (2) is configured to deform plastically under the effect of at least one stress applied to the brittle part and causing damage to the brittle part, so as to store said damage of the brittle part in memory, the deformation sensor being configured to deform under the effect of a stress Ca applied to the brittle part,
elastically when the applied stress Ca is less than or equal to a threshold stress Cs, and
plastically when the applied stress Ca is greater than the threshold stress Cs,
the threshold stress being such that Cs < Ceₘᵢₙ,
Ceₘᵢₙ being the minimum damaging stress for the brittle part,
the deformation sensor comprising a sensor matrix (4) and a collection of electrically conductive particles (6) distributed within said sensor matrix, the collection of electrically conductive particles making up a conductive network of which an electrical property is dependent on an arrangement of the conductive particles that make up the conductive network, said arrangement being modifiable insofar as, under the effect of a stress applied to the brittle part, the arrangement of the conductive particles of the conductive network is modified so that this results in a modification to said electrical property of the conductive network.

2. Device according to the immediately preceding claim, wherein (Ceₘᵢₙ - Cs)/Cs < 20%.

3. Device according to any one of the preceding claims, wherein the minimum damaging stress is the stress beyond which the brittle part begins to suffer from microcracking.

4. Device according to any one of the preceding claims, wherein the brittle part is made of a material having a domain of plastic deformation under load before breaking and a domain of elastic deformation, the domain of plastic deformation representing less than 1% of the domain of elastic deformation.

5. Device according to any one of the preceding claims, wherein the deformation sensor has an impedance that can vary as a function of said stress applied to the brittle part.

6. Device according to any one of the preceding claims, wherein the deformation sensor forms an electrically conductive circuit closed on itself and having no source of electrical energy.

7. Device according to any one of the preceding claims, wherein the electrically conductive particles (6) are carbon nanotubes.

8. Device according to any one of the preceding claims, wherein the sensor matrix is fixed to a support (8), the support is fixed to an interface layer (9) and the interface layer is fixed to the brittle part (2), the interface layer being configured to deform under the effect of the stress Ca applied to the brittle part,
elastically when the applied stress Ca is less than or equal to the threshold stress Cs, and
plastically when the applied stress Ca is greater than the threshold stress Cs.

9. Device according to any one of the preceding claims, comprising a second part (20), the deformation sensor (2) being fixed to the brittle part and to said second part, so as to detect and/or measure a relative movement of one of these parts in relation to the other.

10. Device according to any one of the preceding claims, wherein the deformation sensor is configured not to be destroyed by the application of any stress to the brittle part that does not cause the brittle part to break.

11. Device according to any one of the preceding claims, wherein the brittle part is chosen from the following group: a heat exchanger part, a baking support, a protective part or tile for a turbine combustion chamber, a refractory block for a furnace, a protective part against abrasion, an abrasive, a cutting tool made of ceramic, an element of a pump or hydraulic circuit made of ceramic, an electrical insulator, in particular in the form of a tube, a facing tile, a glass pane, a filter for filtering liquids or gases, a radome or a part which protects a radio or radar antenna.

12. Method for monitoring the physical condition of a part, **characterized in that** said method comprises the following steps:
1) at an initial instant, fixing a deformation sensor (2) to the part (10) so as to form a device according to any one of the preceding claims, the part being a said "brittle part";
2) calibrating the device so as to determine a relationship (24) between said physical condition and a property of the deformation sensor;
3) at an updated instant, measuring said property (M) and, from said relationship (24), determining said physical condition (E) at the updated instant,
the condition of the brittle part being considered:
- "satisfactory" if the property at the updated instant is in the range which corresponds to the stresses applied to the part that lead to an elastic deformation of the deformation sensor or
"unsatisfactory" if the property at the updated instant is in the range which corresponds to the stresses applied to the part that lead to a plastic deformation of the deformation sensor.

13. Method according to the immediately preceding claim, wherein said property is an impedance, preferably a resistance, and/or said physical condition relates to the presence of microcracking.

14. Method according to the immediately preceding claim, wherein, in step 3), said property is measured without contact with said deformation sensor.

15. Method according to any one of the three immediately preceding claims, wherein, in step 3), according to said measurement of said property:
- a mechanical shock experienced, prior to step 3), by the brittle part is detected and/or an amplitude of said mechanical shock is measured; or
- a thermomechanical stress experienced, prior to step 3), by the brittle part is detected and/or an amplitude of said thermomechanical stress is measured.
